# EUROPÄISCHE PATENTANMELDUNG

(11) **EP 2 060 378 A1**
(43) Veröffentlichungstag der Anmeldung: **20.05.2009**
(21) Anmeldenummer: 07405326.5
(22) Anmeldetag: 14.11.2007
(51) Int. Cl.: B29C 44/32, B32B 5/20, C08J 9/00

(54) **Verfahren zur Herstellung eines Verbundmaterials**

(71) Anmelder: Alcan Technology & Management Ltd., 8212 Neuhausen am Rheinfall (CH)
(72) Erfinder: Behre, Kurt, 49078 Osnabrück (DE); Zeppenfeld, Norbert, 49124 Georgsmarienhütte (DE)

(57) **Zusammenfassung**

Bei einem Verfahren zur kontinuierlichen Herstellung eines plattenförmigen Verbundmaterials (10) mit einer zwischen zwei Deckschichten (14, 16) angeordneten Hartschaumschicht (12) werden zwei bandförmige Deckschichten (14', 16') kontinuierlich einer Doppelbandanlage (32) zugeführt und ein schäumbares Ausgangsmaterial (12') wird zwischen die Deckschichten (14', 16') eingebracht und in der Doppelbandanlage (32) zu einer Hartschaumschicht (12) geschäumt und ausgehärtet. Als schäumbares Ausgangsmaterial (12') wird ein Gemenge aus zyklischen Oligomeren (CPBT) des Polybutylenterephthalat (PBT) mit einem Polymerisationskatalysator und expandierbarem Graphit in schmelzflüssigem Zustand zwischen die Deckschichten (14', 16') eingebracht. Mit dem Verfahren lassen sich Hartschaumschichten aus PBT herstellen, die eine im Vergleich zu mit Verfahren nach dem Stand der Technik hergestellten Hartschaumschichten geringere Sprödigkeit aufweisen.

## Beschreibung

Die Erfindung betrifft ein Verfahren zur kontinuierlichen Herstellung eines plattenförmigen Verbundmaterials mit einer zwischen zwei Deckschichten angeordneten Hartschaumschicht, bei welchem Verfahren zwei bandförmige Deckschichten kontinuierlich einer Doppelbandanlage zugeführt werden und ein schäumbares Ausgangsmaterial zwischen die Deckschichten eingebracht und in der Doppelbandanlage zu einer Hartschaumschicht geschäumt und ausgehärtet wird.

Aus der EP-A-1 445 085 ist ein Verfahren zur Herstellung einer Verbundplatte mit einer Hartschaumschicht mit beidseits der Hartschaumschicht angeordneten Deckschichten bekannt. In einem kontinuierlichen Verfahren werden zwei Deckschichten von Rollen abgewickelt und einer Doppelbandanlage, auch als Doppelband-Durchlaufanlage oder Doppelband-Durchlaufpresse bezeichnet, zugeführt. Zwischen die zwei Deckschichten wird ein schäumbares Ausgangsgemisch eingebracht. Das Ausgangsgemisch wird in der Doppelbandanlage zwischen den beiden Deckschichten zu einer Hartschaumschicht geschäumt und ausgehärtet.

Leichtstoffplatten mit einem Hartschaumkern aus beispielsweise Polyurethan mit Deckschichten aus Papier, Kunststoff oder Metallfolie zeichnen sich aus durch eine hohe Steifigkeit bei vergleichsweise geringem Gewicht und eine einfache Verarbeitbarkeit. Sie finden deshalb weit verbreitete Anwendung in vielen Bereichen, so z.B. als Displays, als Fondplatte für gestalterische Arbeiten, im Modell- und Kulissenbau, als Trägerplatte zum Aufbringen von Photos oder Drucken und Plänen oder als Fill-in-Platte für Mobilmessestände und Rahmenelemente.

Aus der EP-A-0 451 635 sind Sandwichplatten mit einem expandierten Blähgraphit enthaltenden Kernmaterial und Deckschichten aus einem thermoplastischen Kunststoff bekannt.

Aus der EP-A-1 732 748 ist eine Verbundplatte mit einer Kernschicht aus geschäumtem Polybutylenterephthalat (PBT) bekannt. Zum Aufschäumen wird das mit Treibmittel beladene Ausgangsmaterial mittels eines Extruders zwischen die Deckschichten eingebracht und unter Druckentlastung zu einer Schaumstoffschicht expandiert. Versuche haben jedoch gezeigt, dass auf diese Weise geschäumtes PBT zu einem spröden und wenig belastbaren Produkt führt.

Der Erfindung liegt die Aufgabe zugrunde, ein Verfahren der eingangs genannten Art zu schaffen, mit welchem sich Verbundplatten mit einem PBT enthaltenden Hartschaumkern herstellen lassen, die eine im Vergleich zu den mit den Verfahren nach dem Stand der Technik hergestellten Hartschaumschichten aus PBT geringere Sprödigkeit aufweisen.

Zur erfindungsgemässen Lösung der Aufgabe führt, dass als schäumbares Ausgangsmaterial ein Gemenge aus zyklischen Oligomeren (CPBT) des Polybutylenterephthalat (PBT) mit einem Polymerisationskatalysator und expandierbarem Graphit in schmelzflüssigem Zustand zwischen die Deckschichten eingebracht wird.

Die zur Durchführung des erfindungsgemässen Verfahrens eingesetzte Doppelbandanlage, auch Doppelband-Durchlaufanlage genannt, enthält üblicherweise ein oberes und unteres Transportband, welche die Deckschichten beim Aufschäumen der Kernschicht stützen und dem Schäumungsdruck entgegenwirken. Die Doppelband-Anlage kann insbesondere eine Doppelband-Durchlaufpresse sein, wobei hierzu die Transportbänder vorzugsweise als sogenannte Pressbänder ausgebildet sind.
Mittels der vorstehend erwähnten Doppelband-Anlage lassen sich Verbundplatten in einem sich durch eine kontinuierliche, quasi endlos-Verbundplattenfertigung auszeichnenden Bandschäumverfahren herstellen.

Das eingesetzte Ausgangsmaterial umfasst auch Blends (Legierungen) der zyklischen Oligomeren (CPBT), welche nach Abschluss der Polymerisation ein PBT-Blend (PBT-Kunststofflegierung) ergeben. Die genannten reaktiven Ausgangsmaterialien zur Herstellung von PBT-Kunststoffen sind in der US 6,369, 157 näher beschrieben, deren Inhalt hiermit Teil der Offenbarung ist. Besonders geeignete reaktive PBT-Ausgangsmaterialien in Form zyklischer Oligomere werden unter dem Namen CBT^{®} (Cyclic Butylene Terephthalate) von der Firma Cyclics hergestellt. Der Polymerisations-Katalysator kann z.B. ein Zink-Katalysator oder ein anderer geeigneter Katalysator sein.

Als expandierbarer Graphit kommen z.B. modifizierte Graphite in Frage, die beim Erhitzen auf Temperaturen von über 150 °C expandieren. Solche Graphite sind bekannt und im Handel erhältlich. Sie können als Treibmittel z. B. NOₓ, SOₓ, CO/CO₂, Halogene oder starke Säuren eingelagert enthalten. Der expandierbare Graphit kann auch schon teilweise expandiert eingesetzt werden.

Bei einer ersten Verfahrensführung werden vor dem Einbringen des schäumbares Ausgangsmaterials zwischen die Deckschichten der expandierbare Graphit und der Polymerisationskatalysator den im schmelzflüssigen Zustand bei einer Temperatur von vorzugsweise 150 °C bis 190 °C vorliegenden zyklischen Oligomeren (CPBT) des Polybutylenterephthalat (PBT) zugegeben.

Bei einer zweiten Verfahrensführung werden vor dem Einbringen des schäumbaren Ausgangsmaterials zwischen die Deckschichten der expandierbare Graphit, die zyklischen Oligomeren (CPBT) des Polybutylenterephthalat (PBT) und der Polymerisationskatalysator vermengt und bei einer Temperatur von vorzugsweise 150 °C bis 190 °C in den schmelzflüssigen Zustand überführt.

Bei einer dritten Verfahrensführung werden die zyklischen Oligomeren (CPBT) des Polybutylenterephthalat (PBT) vor dem Einbringen des schäumbaren Ausgangsmaterials zwischen die Deckschichten in einem Extruder bei einer Temperatur von vorzugsweise 150 °C bis 190 °C in den schmelzflüssigen Zustand überführt und der expandierbare Graphit und der Polymerisationskatalysator der aus dem Extruder austretenden Materialschmelze in einer Nachdosierstrecke zugeführt.

Das schäumbare Ausgangsmaterial wird vorzugsweise in Form eines im wesentlichen flüssigen, reaktiven Ausgangsgemischs zwischen die beiden Deckschichten in der Doppelbandanlage zugeführt. In einem nachfolgenden Prozessschritt wird das Ausgangsgemisch zu einer Hartschaumschicht geschäumt, wobei diese während des Aufschäumprozesses unter Ausbildung einer Sandwich-Struktur eine innige, trennfeste Verbindung mit den Deckschichten eingeht.

Die Dicke der Hartschaumschicht kann beispielsweise 1 bis 50 mm, vorzugsweise 2 bis 25 mm und insbesondere 3 bis 15 mm betragen.

Die Deckschichten können ein oder mehrschichtig aus Papier oder Karton, aus Kunststoff oder aus einer Metallfolie, insbesondere aus einer Aluminiumfolie, sein.

Die Deckschichten sind bevorzugt aus einem Verbundmaterial. Die Deckschichten enthalten besonders bevorzugt eine Schicht aus einem Zellstoff wie Papier, insbesondere Kraftpapier oder Kraftliner, oder Karton. Das Papier kann beispielsweise ein Flächengewicht von 7 - 150 g/m² und der Karton ein solches von 150 - 300 g/m² aufweisen.

Auf der Papier- bzw. Kartonschicht können ein- oder beidseitig weitere Schichten angeordnet sein. Auf der Papier- bzw. Kartonschicht kann beispielsweise ein- oder beidseitig eine Schicht aus einem Kunststoff, wie Polypropylen, Polyamid, PET (Polyethylenterephthalat) und insbesondere Polyethylen angeordnet sein. Ferner kann auf der Kunststoffschicht eine Metallschicht, wie z.B. eine Metallfolie, insbesondere eine Aluminiumfolie, angeordnet sein. Die Deckschicht kann ferner auf der Sichtfläche eine Lackschicht aufweisen. Die Lackschicht kann farbig, farblos, weiss oder schwarz sein. Ferner kann die Lackschicht opak, durchscheinend oder transparent sein. Die Lackschicht kann gegebenenfalls unmittelbar auf der Metallschicht angeordnet sein.

In bevorzugter Ausführung enthält die Deckschicht eine erste Schicht aus einem Papier oder Karton, auf jener der Hartschaumkern abgewandten Oberfläche der Papier- oder Kartonschicht eine Schicht aus einem Kunststoff, insbesondere aus Polyethylen und auf der Kunststoffschicht eine Folie aus einem Metall, insbesondere aus Aluminium, und auf der Metallfolie eine Lackschicht. Die Kunststoffschicht, insbesondere die Kunststoffschicht aus Polyethylen weist beispielsweise ein Flächengewicht von 10 bis 100 g/m², vorzugsweise von 20 bis 60 g/m² und insbesondere von rund 35 bis 45 g/m² auf. Die Metallfolie hat beispielsweise eine Dicke von 5 bis 20 µm, insbesondere von 6 bis 12 µm. Die Deckschicht weist beispielsweise ein gesamthaftes Flächengewicht von 100 bis 400 g/m², vorzugsweise von 150 bis 300 g/m² und insbesondere von 150 bis 250 g/m², auf.

Die Deckschicht kann anstelle einer Metallfolie auch eine metallisierte Folie enthalten. Die Metallisierung kann mittels eines herkömmlichen Dünnschichtverfahrens, wie z.B. Vakuumbeschichtungsverfahren, auf eine Trägerfolie aufgebracht werden. Als Trägerfolien eignen sich beispielsweise Kunststofffolien, Papier, Karton oder Folienverbunde aus den vorgenannten Materialien. Die Trägerfolien können ihrerseits weitere Beschichtungen, wie z.B. Lackbeschichtungen enthalten. Die Metallisierungsschicht kann eine Schichtdicke von z.B. 5 bis 500 nm, insbesondere von 10 bis 200 nm, aufweisen.

Verbundplatten mit oben beschriebenen Deckschichten, welche eine Schicht aus Kunststoff und/oder Metall enthalten, zeichnen sich durch ihre Feuchteresistenz aus. Das heisst, die Feuchtigkeit kann nicht in die Zellstoffschicht der Deckschicht bzw. in die Schaumstoffschicht der Verbundplatte eindringen. Dadurch wird das Verziehen der Verbundplatten durch Feuchtigkeitsänderungen verhindert. Eine solche Verbundplatte weist daher eine äusserst stabile Planlage auf.

In bevorzugter Ausführung sind die Deckschichten ferner durch die Art ihres Aufbaus flammgeschützt. Dies wird erreicht, indem diese, wie oben beschrieben, beispielsweise eine Metallschicht bzw. Metallfolie enthalten. Der Flammschutz kann auch durch die Verwendung von thermoplastischen Deckschicht-Oberflächen gewährleistet sein.

Die Klebverbindung zwischen Deckschicht und Hartschaumschicht wird vorzugsweise durch die Hartschaumschicht selbst gebildet. Die Klebverbindung erfolgt hier im Bandschäumverfahren, wobei während des Schäumungs- und Aushärtungsvorgangs die Hartschaumschicht mit den anliegenden Deckschichten eine innige, trennfeste Klebverbindung eingeht.

Die Verbundplatte kann in verschiedenen Dicken und Formaten hergestellt werden. Dies geschieht beispielsweise mittels Kalibrierung der Vorrichtung, insbesondere der Doppelbandanlage, und/oder durch die Wahl der Rezeptur und Menge des Schaumstoffausgangsmaterials. Die Verbundplatte weist beispielsweise eine Dicke von 2 mm oder grösser, vorzugsweise von 5 mm oder grösser und von 50 mm oder kleiner, vorzugsweise 30 mm oder kleiner und insbesondere 20 mm oder kleiner, auf.

Die aus der Doppelband-Anlage austretende Verbundplatte weist vorzugsweise einen symmetrischen Schichtaufbau mit jeweils beidseits der Hartschaumschicht angeordneten, identischen Deckschichten auf.

Auf die freie Oberfläche einer oder beider Deckschichten kann noch ein Klebstoff aufgetragen werden. Der Klebstoff kann beispielsweise aus der Reihe der lösungsmittelhaltigen, lösungsmittelfreien oder wasserbasierenden Ein- oder Zweikomponentenklebstoffe sein. Der Kleber kann ferner auch ein Kontaktkleber oder ein thermoplastischer Schmelzkleber (Hotmelt) sein.

Der Klebstoff kann aufgrund seiner Eigenschaften permanent, d.h. insbesondere bei Raumtemperaturen, klebrig, d.h. dauerklebrig, sein oder erst durch Anwenden von Wärme oder Hitze unter An- oder Aufschmelzen der Klebstoffschicht Klebewirkung entfalten, wie dies beispielsweise bei Schmelzklebern der Fall ist. Ist der Klebstoff dauerklebrig, so ist auf dessen Oberfläche eine Schutzfolie bzw. Schutzschicht aufzubringen. Bei wärme- bzw. hitzeaktivierbaren Klebstoffen ist die Schutzfolie bzw. Schutzschicht optional. Der Klebstoff kann ferner ein Haftkleber bzw. ein Haftschmelzkleber sein, d.h. die Klebeverbindung ist zerstörungsfrei wiederlösbar.

Liegt der Klebstoff in flüssiger, zähviskoser oder pastöser Form vor, so kann dieser mittels Giessen, Streichen, Sprühen, Spritzen, Walzen, Glatt-Walzen, Walz-Streichen oder Rakeln aufgebracht und verteilt werden. In bevorzugter Ausführung der Erfindung wird die Klebstoffschicht mittels eines Walzauftragsverfahrens, einem Rollrakelstreichverfahren bzw. Roll-Coating oder Rakelstreichverfahren möglichst gleichmässig aufgetragen.

Ist der Klebstoff ein thermoplastischer Schmelzkleber so kann dieser auch als aufschmelzbare Folie auf die Deckschichten der Verbundplatte appliziert werden. Die Folie wird hierzu bevorzugt von einer Folienrolle abgewickelt und kontinuierlich der Deckschicht zugeführt und gegebenenfalls mittels Anpresswalzen auf die Deckschicht aufgetragen.

Die Klebstoffschicht wird vorzugsweise vollflächig, homogen und von gleichmässiger Dicke auf die Deckschicht oder Deckschichten aufgetragen. Es ist jedoch auch denkbar, dass die Klebstoffschicht je nach Verwendungszweck der Verbundplatten gezielt teilflächig und/oder in unterschiedlichen Schichtdicken aufgetragen wird.

Die Herstellung der Klebstoffschicht in einem integrierten Fertigungsschritt in der Herstellung der Verbundplatte erlaubt die gezielte teilflächige Klebstoffbeschichtung sowie die gezielte Steuerung des Klebstoffauftrags und der daraus resultierenden Klebstoffschichtdicken bzw. des Flächengewichts. Ferner kann mit verhältnismässig wenig Aufwand und innert kurzer Zeit die Klebstoffcharakteristik durch Änderung der Klebstoffzusammensetzung oder durch Austausch des Klebstoffsystems gezielt beeinflussen. Selbstverständlich können Mittel zur elektronischen Datenverabeitung, wie Computer, eingesetzt werden, welche den Klebstoffauftrag und die oben genannten Eigenschaften steuern und überwachen.

Bevorzugt wird auf die Klebstoffschicht, wie oben bereits erwähnt, eine Schutzschicht bzw. eine Schutzfolie aufgetragen. Die Schutzschicht bzw. Schutzfolie dient als Schutzabdeckung, welche unmittelbar vor der Kaschierung vom Verbraucher zwecks Freilegen der Klebstofffläche entfernt wird. Die Schutzfolie bzw. Schutzschicht weist daher auf der der Klebstoffschicht zugewandten Seite bevorzugt eine Trennschicht bzw. Trennfilm auf. Die Trennschicht kann beispielsweise eine silikonisierte Oberfläche darstellen. Die silikonisierte Oberfläche wird beispielsweise hergestellt, indem in einem Lösungsmittel gelöste oder in einer Dispersion dispergierte Silikonverbindungen unter anschliessender Vernetzung auf die Oberfläche der Schutzschicht bzw. Schutzfolie aufgebracht werden. Silikonisierte Oberflächen sind in der Regel sehr glatt und rutschig, so dass gebräuchliche Kleber darauf keinen Halt finden.

Die Schutzschicht bzw. Schutzfolie besteht bevorzugt aus einem Kunststoff bzw. ist eine Kunststofffolie, z.B. aus Polyolefin, wie Polyethylen, Polypropylen, aus Polyester oder aus Polyamid.

Die silikonisierte Schutzfolie wird in bevorzugter Ausführung direkt von einer Folienrolle abgewickelt und mittels Auftragsvorrichtung auf die Klebstoffschicht oder -schichten der kontinuierlich und endlos aus der Doppelband-Anlage und der nachfolgenden Klebstoffbeschichtungsvorrichtung austretenden Verbundplatte aufgetragen und gegebenenfalls mittels Anpresswalzen angepresst.

Die Schutzfolie bzw. -film dient als Transportschutz damit die gegebenenfalls bei Raumtemperatur haftende bzw. klebende Klebstoffschicht nicht beschädigt bzw. deren Klebewirkung nicht beeinträchtigt werden. Die Schutzfolie bzw. Schutzfilm wird vor dem Gebrauch der Verbundplatte bzw. vor dem Kaschieren zwecks Freilegen der Klebstoffschicht von dieser entfernt.

Die mit einem Klebstoff und gegebenenfalls mit einer Schutzfolie oder -film beschichtete Verbundplatte wird mittels Förderanlage, beispielsweise einem Rollenförderer bzw. Walzenrollenförderer, kontinuierlich einer quer arbeitenden Säge-, Schneid- oder Stanzvorrichtung, insbesondere einer Querschneideinrichtung, zugeführt, an welcher die endlos nachgeführt Verbundplatte zu Einzelplatten abgelängt bzw. in Format geschnitten wird.

Das Ablängen zu Einzelplatten kann mittels Säge-, Schneid- oder Stanzwerkzeugen geschehen. Das Schneidwerkzeug kann beispielsweise aus Messer oder einem Laserstrahl bestehen. Ferner kann das Schneidwerkzeug auch mittels Wasserstrahl arbeiten. Durch das Ablängen bzw. Formatschneiden wird die endlos aus der Fertigungslinie austretende Verbundplatte kontinuierlich in Einzelplatten zerteilt. Ein Vorteil des Wasserstrahlschneidens liegt darin, dass keine Nachbearbeitung der Schnittflächen notwendig ist.

Es können überdies längs arbeitende Säge-, Schneid- oder Stanzwerkzeuge, insbesondere Längsschneideeinrichtungen, vorgesehen sein, welche die seitlichen Ränder der Verbundplatte zuschneiden.

Die abgelängten Verbundplatten werden nachfolgend vorzugsweise zu Stapeln bzw. Verpackungseinheiten zusammengefasst, was z.B. mittels einer Stapel- oder Palettiervorrichtung geschehen kann. Die Verpackungseinheiten werden nachfolgend von der Fertigungslinie weggeführt.

Die Stapel- bzw. Palettiervorrichtung ist bevorzugt ebenfalls inline angeordnet und zweckmässigerweise der Säge-, Schneid- oder Stanzvorrichtung nachgeordnet. Die zu einzelnen Stapeln bzw. Verpackungseinheiten zusammengefassten Verbundplatten können inline mit einer Umverpackung, wie z.B. einer Kartonumverpackung, versehen werden.

Die erfindungsgemässen Verbundplatten finden bevorzugt Verwendung in Display-Anwendungen, als Innen- oder Aussenschilder, in Ausstellungs- und Messeständen, bei Inneneinrichtungen, zu Ladenausstattungen oder allgemein für Dekorationen, wie Schaufensterdekorationen. Auf die Verbundplatten lassen sich beispielsweise Drucke, wie Digitaldrucke, Photos, Pläne, Folien sowie Gewebe aufbringen. Die Verbundplatten eignen sich überdies auch als Fill-in-Platten für Mobilmessestände und Rahmenelemente. Ferner kann die besagte Verbundplatte auch Verwendung finden als Dekupierplatte zum Ausschneiden, Ausfräsen, Ausstanzen oder Aussägen von Objekten wie z.B. Logos oder Schriftzeichen.

Das fertige Plattenmaterial kann nach Verlassen der Doppelbandanlage auf einem Rollenförderer einer Schneid- oder Sägevorrichtung zugeführt und längs und/oder quer zur Durchlaufrichtung bzw. Vorschubrichtung zu einzelnen Platten oder Streifen geschnitten bzw. abgelängt und batchweise gestapelt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1:: eine Querschnittsdarstellung der Schichtabfolge einer Verbundplatte mit einer Klebstoffschicht;
- Fig. 2:: eine Querschnittsdarstellung der Schichtabfolge der Deckschicht einer Verbundplatte;
- Fig. 3:: einen Verfahrensablauf zur kontinuierlichen Herstellung einer Verbundplatte.

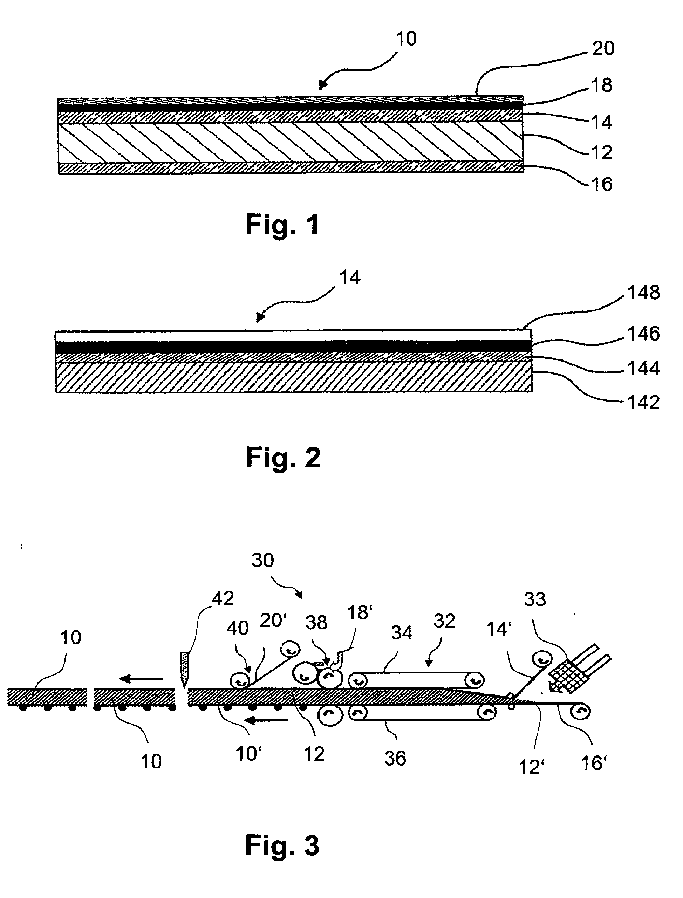

Eine in Fig. 1 gezeigte Verbundplatte 10 weist eine Hartschaumschicht 12 aus einem mit expandierbarem Graphit aufgeschäumten PBT-Kunststoff als Kernschicht auf. Auf beiden Seiten der Hartschaumschicht 12 eine Deckschicht 14, 16 angeordnet. Auf einer ersten Deckschicht 14 ist eine mit einer Schutzfolie 20 abgedeckte Klebstoffschicht 18 aus einem Haftkleber aufgebracht. Die Klebstoffschicht 18 bildet im kaschierbereiten Zustand der Verbundplatte, d.h. nach Abziehen der Schutzfolie 20, eine freie Oberfläche der Verbundplatte 10.

Aus Fig. 2 ist der Aufbau einer speziellen Deckschicht 14 im Detail erkennbar. Die Deckschicht 14 weist eine Zellstoffschicht 142 aus z.B. Papier oder Karton und über der Zellstoffschicht 142 ein Kunststofffilm 144 aus Polyethylen auf. Auf dem Polyethylenfilm 144 ist eine mit einer Lackschicht 148 überzogene Aluminiumfolie 146 angeordnet. Die Lackschicht 148 bildet den Haftgrund für die spätere Klebstoffschicht 18 und gibt der Oberfläche der Verbundplatte das gewünschte optische Aussehen. Sie kann beispielsweise weiss, schwarz oder farbig sein.

Fig. 3 zeigt den Verfahrensablauf zur Herstellung von Verbundplatten 10 mit einer kontinuierlichen arbeitenden Fertigungsanlage 30. Von Rollen abgewickelte Deckschichtenbänder 14', 16' werden kontinuierlich einer Doppelbandanlage 32 zugeführt. Vor Eintritt in die Doppelbandanlage 32 wird ein reaktives Ausgangsgemisch 12' aus CPBT mit einem Polymerisationskatalysator und mit expandiertem Graphit in flüssiger Form aus einem Mischkopf oder einer Extruderdüse 33 auf das untere Deckschichtband 16' aufgetragen und nach einer kurzen Strecke vom oberen Deckschichtband 14' abgedeckt. Innerhalb der Doppelbandanlage 32 liegen die Deckschichtbänder 14', 16' einem oberen und unteren endlos umlaufenden Transportband 34, 36 an, wobei das reaktive Ausgangsgemisch 12' zur Hartschaumschicht 12 aufschäumt, aushärtet und sich unter Ausbildung eines bandförmigen Sandwich-Verbundes 10' innig mit den Deckschichtbändern 14', 16' verbindet. Das obere Deckschichtband 14' des Sandwich-Verbundes 10' wird anschliessend an einer der Doppelband-Anlage 30 nachgeordneten Klebstoffbeschichtungsvorrichtung 38 mittels eines kontinuierlichen Beschichtungsverfahrens, hier ein Rollrakel-Streichverfahren, vollflächig mit einem Klebstoff 18' beschichtet.

Nach Stabilisierung der Klebstoffschicht wird in einem weiteren kontinuierlichen Verfahrensschritt an einer nachfolgenden Auftragsvorrichtung 40 ein Schutzfolienband 20' auf den Klebstofffilm 18' wiederablösbar aufgebracht. Das Schutzfolienband 20' soll den Klebstofffilm bis zum weiteren Einsatz der Verbundplatten vor Beschädigungen und Verschmutzung schützen.

Die beschichtete bandförmige Verbundplatte 10' wird nachfolgend an einer Ablängstation 42 in-line zu den einzelnen Verbundplatten 10, d.h. in sogenannte Formatzuschnitte, abgelängt.

Die abgelängten Verbundplatten 10 werden in einem nachfolgenden Verfahrensschritt vorzugsweise zu Stapeln zusammengefasst und von der Fertigungslinie weggeführt.

## Patentansprüche

1. Verfahren zur kontinuierlichen Herstellung eines plattenförmigen Verbundmaterials (10) mit einer zwischen zwei Deckschichten (14, 16) angeordneten Hartschaumschicht (12), bei welchem Verfahren zwei bandförmige Deckschichten (14', 16') kontinuierlich einer Doppelbandanlage (32) zugeführt werden und ein schäumbares Ausgangsmaterial (12') zwischen die Deckschichten (14', 16'), eingebracht und in der Doppelbandanlage (32) zu einer Hartschaumschicht (12) geschäumt und ausgehärtet wird,
**dadurch gekennzeichnet, dass**
als schäumbares Ausgangsmaterial (12') ein Gemenge aus zyklischen Oligomeren (CPBT) des Polybutylenterephthalat (PBT) mit einem Polymerisationskatalysator und expandierbarem Graphit in schmelzflüssigem Zustand zwischen die Deckschichten (14', 16') eingebracht wird.

2. Verfahren nach Anspruch 1, **dadurch gekennzeichnet, dass** vor dem Einbringen des schäumbares Ausgangsmaterials (12') zwischen die Deckschichten (14', 16') der expandierbare Graphit und der Polymerisationskatalysator den im schmelzflüssigen Zustand bei einer Temperatur von 150 °C bis 190 °C vorliegenden zyklischen Oligomeren (CPBT) des Polybutylenterephthalat (PBT) zugegeben werden.

3. Verfahren nach Anspruch 1, **dadurch gekennzeichnet, dass** vor dem Einbringen des schäumbaren Ausgangsmaterials (12') zwischen die Deckschichten (14', 16') der expandierbare Graphit, die zyklischen Oligomeren (CPBT) des Polybutylenterephthalat (PBT) und der Polymerisationskatalysator vermengt und bei einer Temperatur von 150 °C bis 190 °C in den schmelzflüssigen Zustand überführt werden.

4. Verfahren nach Anspruch 1, **dadurch gekennzeichnet, dass** die zyklischen Oligomeren (CPBT) des Polybutylenterephthalat (PBT) vor dem Einbringen des schäumbaren Ausgangsmaterials (12') zwischen die Deckschichten (14', 16') in einem Extruder bei einer Temperatur von 150 °C bis 190 °C in den schmelzflüssigen Zustand überführt und der expandierbare Graphit und der Polymerisationskatalysator der aus dem Extruder austretenden Materialschmelze zugeführt werden.

5. Verfahren nach einem der Ansprüche 1 bis 4, **dadurch gekennzeichnet, dass** die Deckschichten (14, 16) aus einem Papier oder Karton enthaltenden Verbundmaterial sind.

6. Verfahren nach einem der Ansprüche 1 bis 5, **dadurch gekennzeichnet, dass** auf wenigstens einer Deckschichten (14) eine Klebstoffschicht (18) aufgetragen wird.

7. Verfahren nach Anspruch 6, **dadurch gekennzeichnet, dass** eine Schutzfolie (20) oder Schutzschicht auf die Klebstoffschicht (18)) aufgetragen wird.

8. Verfahren nach einem der Ansprüche 1 bis 7, **dadurch gekennzeichnet, dass** die kontinuierlich gefertigte Verbundplatte (10') zu Einzelplatten (10) abgelängt wird.

9. Verfahren nach einem der Ansprüche 1 bis 8, **dadurch gekennzeichnet, dass** die Deckschicht (14) eine erste Schicht aus Papier oder Karton (142) enthält und auf der der Hartschaumschicht (12) abgewandten Seite der ersten Schicht (142) eine zweite Schicht (144) aus Kunststoff, insbesondere aus Polyethylen, und auf der Kunststoffschicht (144) eine Metallfolie (146), insbesondere eine Aluminiumfolie, und auf der Metallfolie (146) eine Lackschicht (148) angeordnet ist.

10. Verwendung einer mit dem Verfahren nach einem der vorangehenden Ansprüche hergestellten Verbundplatte (10) zum Kaschieren von Drucken, Photos, Plänen, Folien oder Geweben.
